# EUROPÄISCHE PATENTSCHRIFT

(11) **EP 0 570 759 B1**
(45) Veröffentlichungstag und Bekanntmachung des Hinweises auf die Patenterteilung: **27.11.1996**
(21) Anmeldenummer: 93107237.5
(22) Anmeldetag: 05.05.1993
(51) Int. Cl.: B29C 45/17

(54) **Formschliesseinrichtung zur Aufbringung grosser Schliesskräfte**
Mould clamping device for building up large clamping forces
Dispositif de fermeture de moule pour introduire de grandes forces de fermeture

(30) Priorität: 21.05.1992 DE 4216827
(43) Veröffentlichungstag der Anmeldung: 24.11.1993
(73) Patentinhaber: Hemscheidt Maschinentechnik Schwerin GmbH & Co., 19061 Schwerin (DE)
(72) Erfinder: Füller, Klaus, O-2792 Schwerin (DE)

(56) Entgegenhaltungen:
- WO-A-89/02357
- DE-A- 1 962 811
- DE-B- 1 010 329
- US-A- 3 531 973

## Beschreibung

Die Erfindung betrifft eine Formschließeinrichtung für Spritzgießmaschinen zur Aufbringung großer Schließkräfte, mit einer gegenüber einem Maschinengestell festen und einer auf einem Gleitschlitten montierten beweglichen Werkzeugaufspannplatte, wobei der Gleitschlitten auf dem Maschinengestell geführt wird. Die Werkzeugaufspannplatten nehmen jeweils eine Formhälfte eines Formwerkzeuges auf und sind über freitragende oder durchgehende Säulen miteinander verbindbar oder verbunden. Die Säulen sind in Abhängigkeit von der Werkzeugeinbauhöhe durch eine Werkzeughöhenverstellvorrichtung einstellbar. Zum Zwecke des Zusammen- oder Auseinanderfahrens der Formhälften des Formwerkzeuges wird die bewegliche Werkzeugaufspannplatte mit Hilfe von einem oder mehreren Eilgangzylindern in die Öffnungs- oder Schließstellung gefahren und durch Schließzylinder die Schließ- und Zuhaltekraft und die Aufreißkraft aufgebracht.

Der Entwicklungstrend bei Spritzgießmaschinen zur Kunststoffverarbeitung orientiert sich zunehmend auf den Bedarf von großflächigen und voluminösen Spritzgießteilen, die sehr hohe Spritzvolumen und damit verbunden große Schließkräfte ab 30 000 kN aufwärts erfordern und in der Automobilindustrie und bei der Herstellung von Großcontainern benötigt werden. In der Regel handelt es sich dabei um Einzelmaschinen, die infolge des relativ geringen Bedarfes keine Serienfertigung gestatten, wodurch der konstruktive, technologische und fertigungstechnische Aufwand sehr groß ist. Das liegt darin begründet, daß zur Kraftübertragung die Formschließeinrichtungen üblicherweise mit vier Säulen ausgerüstet sind, deren Querschnitte mit steigender Schließkraft größer dimensioniert werden müssen. Dementsprechend sind die die Säulen umgebenden Säulenmuttern und die übrigen Verbindungselemente konstruktiv und technologisch anzupassen, was hohe Kosten verursacht.

Zur Lösung des Problems wurde in der Zeitschrift Kunststoffe 1991 Heft 10 S. 865 ff bereits vorgeschlagen, zwei Spritzgießmaschinen mit rechteckigen Werkzeugaufspannplatten, deren Höhe größer als die Breite ist, unmittelbar nebeneinander anzuordnen. Dadurch soll u. a. die Möglichkeit geschaffen werden, ein Großwerkzeug so einzubauen, daß es über die Werkzeugaufspannplatten beider Spritzgießmaschinen reicht und beide Schließeinrichtungen miteinander verbindet.

Von Nachteil bei dieser Lösung ist ebenfalls der technisch und ökonomisch sehr hohe Aufwand, insbesondere dann, wenn auf diesen Maschinen ständig große Kunststoffteile gespritzt werden. So sind die doppelte Anzahl Führungen für die bewegliche Werkzeugaufspannplatte, die doppelte Anzahl Verriegelungseinrichtungen und ein höherer Rohrleitungs- und Steuerungsaufwand erforderlich.

Aus der DEOS 2063977 ist ferner eine Formschließeinrichtung für eine Spritzgießmaschine bekannt, deren Werkzeugaufspannplatten durch unterschiedlich angeordnete und ausgebildete Verbindungselemente miteinander Kontakt haben. So sind für die Realisierung der Öffnungs- und Schließbewegung Fahrzylinder vorgesehen, für die Übertragung der Schließ- und Aufreißkräfte sogenannte Riegelholme und für die Führung der beweglichen Werkzeugaufspannplatte zusätzliche Führungsholme. In Abhängigkeit von der Größe der Formwerkzeuge und der aufzubringenden Schließkraft sind auf einer gemeinsamen Umfangslinie die Fahrzylinder, die Führungsholme und die Riegelholme in unterschiedlicher Anzahl angeordnet und besitzen unterschiedliche Querschnitte. Zur Übertragung der Schließ- und Aufreißkräfte sind dabei minimal zwei und maximal vier Riegelholme vorgesehen. Für die Aufnahme großflächiger Formwerkzeuge auf großflächigen Werkzeugaufspannplatten, die Schließkräfte über 30000 kN erfordern, ergibt sich durch den großen und ungleichmäßigen Abstand der Riegelholme bei der Schließkraftaufbringung eine ungleichmäßige Lastverteilung und eine sehr große Durchbiegung der Werkzeugaufspannplatten. Ferner wirken bei der Schließkraftaufbringung große Querkräfte auf die Führungsholme, die einen schnellen Verschleiß der Führungen zur Folge haben. Die Anordnung der Riegelholme in einem gleichmäßigen Abstand am Umfang zueinander ist nicht möglich, weil dann die Funktion der Antriebsholme oder die Funktion der Führungsholme nachteilig beeinträchtigt wird.

Aus der Anmeldung WO 89/02357 ist eine Formschließeinrichtung für eine Spritzgießmaschine bekannt, bei der die bewegliche und die feste Werkzeugaufspannplatte durch mehr als vier Säulen verbindbar sind und bei der sich ein Eilgangzylinder außerhalb der Säulenbahn und unterhalb der Formschließeinrichtung befindet. Mindestens eine Säule ist bei dieser Lösung innerhalb einer Quadrat- oder Rechteckfläche angeordnet, wobei alle Säulen gleiche Querschnitte besitzen sollen. Der Nachteil dieser Lösung besteht darin, daß durch die innerhalb der Werkzeugaufspannfläche angeordnete(n) Säule(n) nur Formwerkzeuge aufgenommen werden können, deren Formteile im mittleren Bereich einen Durchbruch besitzen. Für große Formteile, wie zum Beispiel Behälter und Container, die in der Mitte keine Öffnungen haben dürfen, können die dazugehörigen Formwerkzeuge nicht auf den Werkzeugaufspannplatten befestigt werden. Ein weiterer Nachteil besteht darin, daß das nicht dargestellte Einspritzaggregat nicht, wie an sich üblich ist, in der Längsmittelachse zur Formschließeinrichtung angeordnet werden kann, weil sich an der Stelle eine Säule befindet. Somit kann das Einspritzaggregat nur quer zur Formschließeinrichtung angeordnet werden, wodurch sich eine ungünstige Flächenausnutzung bei der Maschinenaufstellung ergibt.

Ziel der Erfindung ist es, den technischen und ökonomischen Aufwand bei der Herstellung von großen Spritzgußteilen zu senken. Die Aufgabe der Erfindung besteht darin, eine kostengünstige und funktionssichere Formschließeinrichtung zu entwickeln, die ohne Einschränkung für die Aufnahme von Formwerkzeugen für großflächige voluminöse Spritzgußteile und Schließkräfte über 30000 kN einsetzbar ist.

In Verbindung mit dem Oberbegriff des Patentanspruches 1 wird die Aufgabe dadurch gelöst, daß die Säulen, durch die die bewegliche Werkzeugaufspannplatte und die feste Werkzeugaufspannplatte miteinander verbindbar oder verbunden sind, im annähernd gleichen Abstand zueinander auf einer Ellipsenbahn angeordnet sind und mindestens zwei an sich bekannte diagonal gegenüberliegende Eilgangzylinder vorhanden sind, die sich außerhalb der Ellipsenbahn befinden. Eine andere Ausführungsform der Erfindung sieht vor, daß die Säulen im annähernd gleichen Abstand zueinander auf einer Kreisbahn angeordnet sind und mindestens zwei an sich bekannte diagonal gegenüberliegende Eilgangzylinder vorhanden sind, die sich außerhalb der Kreisbahn befinden. Schließlich ist es auch möglich, die Säulen so anzuordnen, daß sie geometrisch eine Rechteckform einschließen und dabei annähernd gleiche Abstände zueinander haben. Auch bei dieser Ausführungsform der Erfindung befinden sich die Eilgangzylinder außerhalb der Rechteckform.

Die Vorteile der erfinderischen Lösung bestehen darin, daß die Anordnung von mehr als vier Säulen zwischen der beweglichen und der festen Werkzeugaufspannplatte auf einer geometrischen Ellipsen-, Kreis- oder Rechteckkontur die Übertragung größerer Schließkräfte mit einem ökonomisch vertretbaren Aufwand gewährleistet. Es ist dadurch möglich, die Werkzeugaufspannplatten wesentlich größer auszubilden, um großflächige Formwerkzeuge aufzuspannen, ohne die Säulen und die sie umgebenden Elemente, mit Ausnahme der Werkzeugaufspannplatten, konstruktiv, technologisch und fertigungstechnisch zu verändern. Die Verwendung von Säulen einer kleineren Formschließeinrichtung, in der vierholmigen Ausführung, ist möglich, wodurch Vorrichtungen, Werkzeuge und Prüfmittel wiederverwendbar sind und die Kosten günstig beeinflußt werden. Durch die Anordnung von mehr als vier Säulen gleichen Querschnitts und im gleichen Abstand zueinander wird ferner erreicht, daß die Durchbiegung der Werkzeugaufspannplatten bei der Aufbringung der Schließkraft vermindert wird, da bei der Kraftübertragung der günstige Belastungsfall einer ringsum gelagerten Platte angenähert erreicht wird. Ferner kann auf die sehr kostenaufwendige Lösungsvariante, die zur Aufnahme von großen Formwerkzeugen zwei Formschließeinrichtungen nebeneinander benötigt, verzichtet werden. Besonders vorteilhaft ist die Realisierung der Erfindung bei Formschließeinrichtungen, deren bewegliche und feste Werkzeugaufspannplatte durch freitragende Säulen miteinander verbindbar sind. Das Formwerkzeug kann dann problemlos bei weit geöffnetem Werkzeugraum ohne Behinderung durch die Säulen gewechselt werden.

Bei Formschließeinrichtungen, deren bewegliche und feste Werkzeugaufspannplatte über durchgehende Säulen ständig miteinander verbunden sind, ist es erforderlich, eine oder zwei Säulen zum Zwecke des Werkzeugwechsels zu ziehen.

Nachstehend soll die Erfindung in einem Ausführungsbeispiel näher erläutert werden. In den zugehörigen Zeichnungen ist dargestellt.
- Fig. 1: Formschließeinrichtung mit freitragenden Säulen in der Vorderansicht
- Fig. 2: Draufsicht auf die bewegliche Werkzeugaufspannplatte gemäß der Schnittlinie I-I aus Figur 1
- Fig. 3: Draufsicht auf die feste Werkzeugaufspannplatte gemäß der Schnittlinie II-II aus Figur 1.

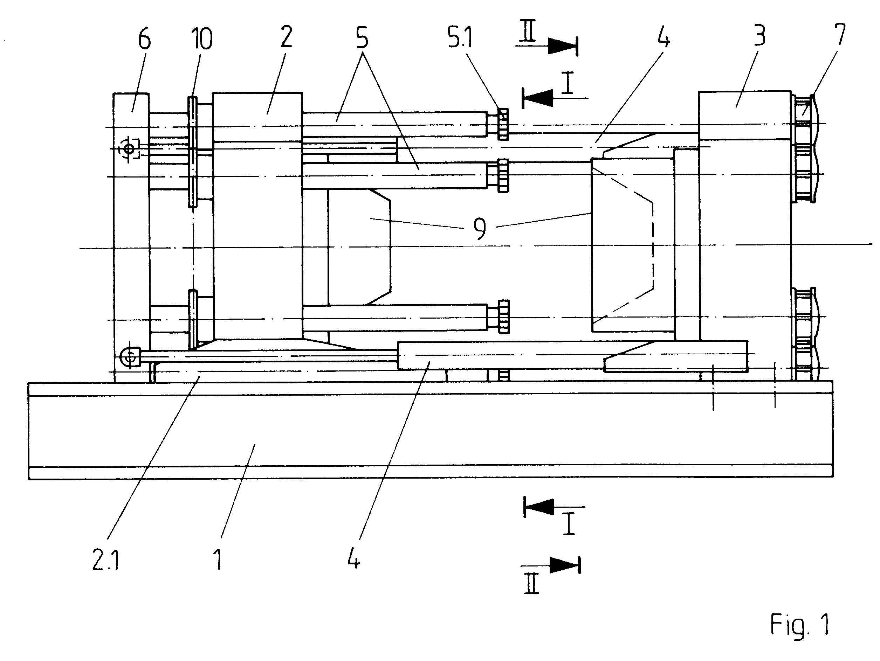

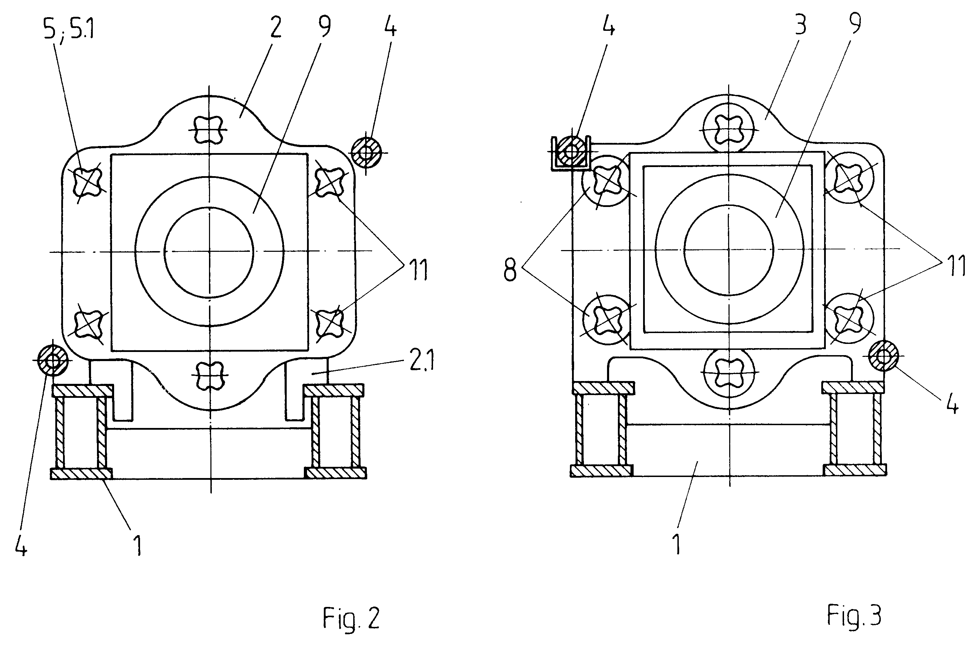

In den Figuren 1, 2 und 3 ist eine Ausführungsform der Erfindung bei einer Formschließeinrichtung für Spritzgießmaschinen dargestellt. Die Formschließeinrichtung besteht aus einer festen Werkzeugaufspannplatte 3, die auf einem Maschinengestell 1 abgestützt wird, und einer auf einem Gleitschlitten 2.1 beweglichen Werkzeugaufspannplatten 2 , wobei der Gleitschlitten auf dem Maschinengestell 1 geführt wird. Die Werkzeugaufspannplatten 2 und 3 nehmen jeweils eine Hälfte eines Formwerkzeuges 9 auf und sind über sechs freitragende Säulen 5, die in der beweglichen Werkzeugaufspannplatte 2 gelagert sind, miteinander verbindbar.

Die Anzahl der Säulen 5 kann in Abhängigkeit von der Größe des Formwerkzeuges 9, der Größe der Werkzeugaufspannplatten 2 und 3 und der aufzubringenden Schließkraft bestimmt werden und kann dementsprechend kleiner oder größer als im gewählten Ausführungsbeispiel sein. Die Säulen 5 sind gemäß dem Ausführungsbeispiel auf einer Ellipsenbahn 11 angeordnet und in der beweglichen Werkzeugaufspannplatte 2 gelagert und haben alle den gleichen Querschnitt. Die Anordnung der Säulen 5 kann jedoch auch auf einer Kreisbahn erfolgen bzw. so vorgenommen werden, daß sie geometrisch zueinander eine Rechteckform bilden. Die Säulen 5 sind wie üblich, in Abhängigkeit von der Höhe des Formwerkzeuges 9, durch eine Werkzeughöhenverstellvorrichtung 10 einstellbar. Zum Zusammen- oder Auseinanderfahren der Formhälften des Formwerkzeuges 9 wird die bewegliche Werkzeugaufspannplatte 2 mit Hilfe von einem oder mehreren Eilgangzylindern 4 in die Öffnungs- oder Schließstellung gefahren. Im Ausführungsbeispiel sind für die Realisierung der Fahrbewegung der beweglichen Werkzeugaufspannplatte 2 zwei Eilgangzylinder 4 vorgesehen, die sich gegenüberliegend und außerhalb von den auf der Kreisbahn, der Ellipsenbahn bzw. der in Rechtseckform angeordneten Säulen 5 befinden. Wie aus dem Ausführungsbeispiel ferner ersichtlich ist, sind die Säulen 5 an einem Ende an einem Endrahmen 6 befestigt, mit dem auch die Kolbenstangen der Eilgangzylinder 4 verbunden sind. Beim Schließen des Formwerkzeuges tauchen die Säulen 5, die am freitragenden Ende ein Klauenprofil 5.1 besitzen in Klauenbuchsen 8 ein, die sich in der festen Werkzeugaufspannplatte 3 befinden und ebenfalls auf der gleichen Ellipsenbahn 11 angeordnet sind. Anschließend erfolgt die Verriegelung und über die Schließzylinder 7 wird die Schließ- und Zuhaltekraft und die Aufreißkraft aufgebracht.

Während dieser Zeit wird der thermoplastische Kunststoff mit Hilfe der Spritzeinheit, die hier nicht dargestellt ist, in das Formwerkzeug 9 eingespritzt und das Spritzgießteil geformt.

Die erfindungsgemäße Lösung ist problemlos auch auf Spritzgießmaschinen übertragbar, deren Werkzeugaufspannplatten über durchgehende Säulen miteinander verbunden sind. Dazu werden dann lediglich für den Formwerkzeugwechsel eine oder zwei Säulen entfernt, damit der ungehinderte Zugang zum Werkzeugraum gewährleistet ist. Lösungen für das Ziehen einer Säule bei derartigen Spritzgießmaschinen sind u. a. in der EP Anmeldung 0 313 035 und in der DEOS 3 836 097 beschrieben und brauchen daher nicht näher erläutert werden.

## Patentansprüche

1. Formschließeinrichtung für Spritzgießmaschinen zur Aufbringung großer Schließkräfte ab 30000 kN mit einer gegenüber einem Maschinengestell festen und einer auf einem Gleitschlitten montierten beweglichen Werkzeugaufspannplatte, wobei der Gleitschlitten auf dem Maschinengestell geführt wird, beide Werkzeugaufspannplatten die Formhälften eines Formwerkzeuges aufnehmen und über mehr als vier freitragende oder durchgehende Säulen gleichen Querschnitts miteinander verbindbar oder verbunden sind, wobei die Säulen in Abhängigkeit von der Werkzeugeinbauhöhe durch eine Werkzeughöhenverstellvorrichtung einstellbar sind, zum Zusammen- oder Auseinanderfahren der Formhälften des Formwerkzeuges die bewegliche Werkzeugaufspannplatte durch Eilgangzylinder in die Öffnungs- oder Schließstellung gefahren wird und durch Schließzylinder die Schließ- und Zuhaltekraft und die Aufreißkraft aufgebracht wird, dadurch gekennzeichnet, daß die Säulen (5), durch die die bewegliche Werkzeugaufspannplatte (2) und die feste Werkzeugaufspannplatte (3) miteinander verbindbar oder verbunden sind, im annähernd gleichen Abstand zueinander auf einer Ellipsenbahn (11) angeordnet sind und mindestens zwei an sich bekannte diagonal gegenüberliegende Eilgangzylinder (4) vorhanden sind, die sich außerhalb der Ellipsenbahn (11) befinden.

2. Formschließeinrichtung mit den Merkmalen des Oberbegriffs des Patentanspruches 1, dadurch gekennzeichnet, daß die Säulen (5) im annähernd gleichen Abstand zueinander auf einer Kreisbahn (11) angeordnet sind und mindestens zwei an sich bekannte diagonal gegenüberliegende Eilgangzylinder (4) vorhanden sind, die sich außerhalb der Kreisbahn befinden.

3. Formschließeinrichtung nach dem Oberbegriff des Patentanspruches 1, dadurch gekennzeichnet, daß die Säulen (5) zwischen der beweglichen Werkzeugaufspannplatte (2) und der festen Werkzeugaufspannplatte (3) im annähernd gleichen Abstand zueinander in Rechteckform angeordnet sind und mindestens zwei an sich bekannte diagonal gegenüberliegende Eilgangzylinder (4) vorhanden sind, die sich außerhalb der geometrischen Kontur vom Rechteck befinden.

## Claims

1. A mould closing arrangement for injection moulding machines for applying high closing forces from 30,000 kN comprising a tool mounting plate which is feed relative to a machine frame structure and a movable tool mounting plate mounted on a slide carriage, wherein the slide carriage is guided on the machine frame structure, the two tool mounting plates carry the mould halves of a moulding tool and are connected or can be connected together by way of more than four cantilever or continuous column members of identical cross-section, wherein the column members are adjustable in dependence on the tool installation height by a tool height adjusting means, for moving the mould halves of the mould tool together or away from each other the movable tool mounting plate is moved into the open or closed position by fast-motion cylinders and the closing and holding-closed force and the opening force is applied by closing cylinders, characterised in that the column members (5) by which the movable tool mounting plate (2) and the feed tool mounting plate (3) are or can be connected together are arranged at an approximately equal spacing relative to each other on an elliptical path (11) and there are at least two per se known, diagonally oppositely disposed fast-motion cylinders (4) which are disposed outside the elliptical path (11).

2. A mould closing arrangement having the features of the classifying portion of claim 1 characterised in that the column members (5) are arranged at an approximately equal spacing relative to each other on a circular path (11) and there are at least two per se known, diagonally oppositely disposed fast-motion cylinders (4) which are disposed outside the circular path.

3. A mould closing arrangement according to the classifying portion of claim 1 characterized in that the column members (5) are arranged at an approximately equal spacing relative to each other in a rectangular shape between the movable tool mounting plate (2) and the fixed tool mounting plate (3) and there are at least two per se known, diagonally oppositely disposed fast-motion cylinders (4) which are disposed outside the geometrical contour of the rectangle.

## Revendications

1. Dispositif de fermeture de moules de machines à injection, devant fournir des forces de fermeture de 30 000 kN et plus, dans lequel :
- il est prévu une plaque de serrage de l'outil, fixe par rapport au bâti de la machine et une plaque de serrage de l'outil, mobile, montée sur un coulisseau mobile sur un guidage du bâti,
- les deux plaques de serrage reçoivent chacune une moitié de l'outil de moulage et peuvent être, ou sont reliées entre elles par plus de quatre colonnes, en saillie ou traversantes, de sections égales,
- les colonnes sont réglables par un dispositif de réglage en fonction de la hauteur de l'outil de moulage,
- pour rassembler ou séparer les deux moitiés du moule, la plaque mobile de serrage est amenée en position de fermeture ou d'ouverture par un vérin rapide, tandis qu'un vérin de fermeture fournit la force de fermeture et de maintien ainsi que la force de séparation à l'ouverture, caractérisé en ce que :
les colonnes (5) qui peuvent relier ou relient la plaque mobile de serrage (2) et la plaque fixe de serrage (3) sont disposées à peu près régulièrement espacées sur une piste de forme elliptique (11), au moins deux vérins rapides (4) situés de manière connue en diagonale, étant prévus à l'extérieur de la piste elliptique (11).

2. Dispositif de fermeture présentant les caractéristiques, exposé introductif de la revendication 1,
caractérisé en ce que
les colonnes (5) sont disposées à peu près régulièrement espacées sur une piste circulaire (11), au moins deux vérins rapides (4) situés de manière connue en diagonale, étant prévus à l'extérieur de la piste (11).

3. Dispositif de fermeture selon l'exposé introductif de la revendication 1,
caractérisé en ce que
les colonnes (5) sont disposées entre la plaque mobile (2) et la plaque fixe (3) et à peu près régulièrement espacés aux coins d'un rectangle, au moins deux vérins rapides situés, de manière connue en diagonale, se trouvant à l'extérieur du rectangle.
